# EUROPEAN PATENT APPLICATION

(11) **EP 0 933 938 A2**
(43) Date of publication of application: **04.08.1999**
(21) Application number: 99300509.9
(22) Date of filing: 25.01.1999
(51) Int. Cl.: H04N 5/932

(54) **Apparatus and method of generating synchronizing pulse**

(30) Priority: 29.01.1998 JP 3201498
(71) Applicant: VICTOR COMPANY OF JAPAN LIMITED, Yokohama-Shi Kanagawa-Ken (JP)
(72) Inventor: Takeshita, Hiroshi, Yokohama-shi, Kanagawa-ken (JP)
(74) Representative: Crawford, Andrew Birkby

(57) **Abstract**

Synchronizing pulses are generated based on horizontal synchronizing signals carried by an input television (TV) signal. A first pulse is generated at the same timing as each of the synchronizing signals. A control pulse is generated in response to the first pulse. The generation of the first pulse is controlled so that it depends on a width of the control pulse. The first pulse is output, in response to the first pulse, as each of the synchronizing pulses at the same timing as the horizontal synchronizing signals. The control pulse is shifted for a period of time by which one of the horizontal synchronizing signals has been shifted. One of the synchronizing pulses is thus shifted for the period of time. The synchronizing pulse corresponds to the shifted horizontal synchronizing signal.

## Description

### BACKGROUND OF THE INVENTION

The present invention relates to generation of synchronizing pulses at the same timing as horizontal synchronizing signals carried by TV signals.

A conventional synchronizing pulse generator generates synchronizing pulses at the same timing as horizontal synchronizing signals carried by input TV signals. The synchronizing pulses are used as reference signals, timing pulses, etc., for video signal processing.

Synchronizing pulse generation is carried out with no error even if input TV signals are distorted, or lack a video or horizontal synchronizing signals due to physical damage of a magnetic tape on which the TV signals have been recorded.

In operation, the generator first catches falling edges of the horizontal synchronizing signals to generate narrow pulses that meet those falling edges. No narrow pulses are generated for a portion of the TV signals if a horizontal synchronizing signal has been lost at the portion.

The generator has a counter to which the narrow pulses are supplied. The counter starts to count the number of clock pulses also supplied thereto in response to an initial narrow pulse. The counter then generates an interpolation pulse when the counted number reaches the number that corresponds to the period for a horizontal scanning line, and continues to generate an interpolation pulse per horizontal scanning line. The interpolation pulses have a width that almost equals to that of each narrow pulse.

The narrow pulse train and the interpolation pulse train are switched to output the narrow pulses as the synchronizing pulses with the interpolation pulses such that the interpolation pulses are put into the narrow pulse train for the portions at which horizontal synchronizing signals have been lost.

The conventional generator however has a drawback as discussed below when applied to reproduction of TV signals produced according to a 625-line television system, such as PAL and SECAM.

Normal playback reproduces a TV signal that corresponds to 312. 5 horizontal scanning lines from each track on a magnetic tape. On the other hand, double (2 x) speed playback reproduces a TV signal that corresponds to 313. 25 (312. 5 + 0. 75) horizontal scanning lines from each track on a magnetic tape (for example, VHS-format). This results in delay of TV signals that corresponds to 0. 25 lines per switching of magnetic heads from the normal to (2x) speed playback mode. Such delay causes reproduction of synchronizing pulses at timing different from horizontal synchronizing signals carried by input TV signals.

Moreover, still picture playback reproduces a TV signal that corresponds to 311. 75 (312. 5 - 0. 75) horizontal scanning lines from each track on a magnetic tape (for example, VHS-format). This results in advance of phase corresponding to 0. 25 lines per switching of magnetic heads from the normal to still picture playback mode. Such advance also causes reproduction of synchronizing pulses at timing different from horizontal synchronizing signals carried by input TV signals.

### SUMMARY OF THE INVENTION

A purpose of the present invention is to provide an apparatus and a method of generating synchronizing pulses at the same timing as horizontal synchronizing signals carried by input TV signals produced according to a television system, such as 625-line television system, PAL and SECAM, etc.

The present invention provides an apparatus for generating synchronizing pulses based on horizontal synchronizing signals carried by an input television (TV) signal. The apparatus includes a generator to generate a first pulse at the same timing as each of the synchronizing signals. The apparatus also included a first controller to generate a control pulse in response to the first pulse and control the generator so that the generation of the first pulse depends on a width of the control pulse, and a second controller, in response to the first pulse, to output the first pulse as each of the synchronizing pulses at the same timing as the horizontal synchronizing signals. The apparatus further includes a shifter to shift the control pulse for a period of time by which one of the horizontal synchronizing signals has been shifted, thus one of the synchronizing pulses being shifted for the period of time, the synchronizing pulse being corresponding to the shifted horizontal synchronizing signal.

Furthermore, the present invention provides a method of generating synchronizing pulses based on horizontal synchronizing signals carried by an input television (TV) signal. A first pulse is generated at the same timing as each of the synchronizing signals. A control pulse is generated in response to the first pulse. The generation of the first pulse is controlled so that the generation depends on a width of the control pulse. The first pulse is output, in response to the first pulse, as each of the synchronizing pulses at the same timing as the horizontal synchronizing signals. The control pulse is shifted for a period of time by which one of the horizontal synchronizing signals has been shifted. One of the synchronizing pulses is thus shifted for the period of time. The synchronizing pulse corresponds to the shifted horizontal synchronizing signal.

### BRIEF DESCRIPTION OF DRAWINGS

FIG. 1 is a block diagram of a preferred embodiment of an apparatus for generating synchronizing pulses according to the present invention;
FIG. 2 is a timing chart for explaining the operation of the apparatus shown in FIG. 1;
FIG. 3 is a block diagram of an automatic phase controller (AFC) shown in FIG. 1;
FIG. 4 illustrates track patterns of TV signals recorded on a magnetic tape;
FIGS. 5A, 5B and 5C explain operations of the AFC in the normal, (2x) speed, and still picture playback modes, respectively; and
FIGS. 6A and 6B explain other operations of the AFC in the (2x) speed, and still picture playback modes, respectively.

### DETAILED DESCRIPTION OF PREFEREED EMBODIMENT

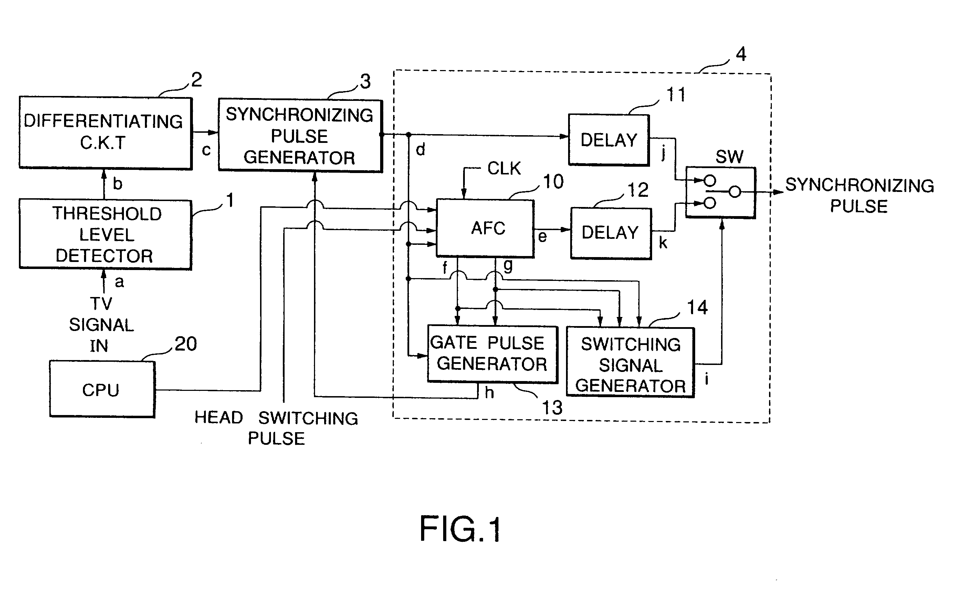

Shown in FIG. 1 is a block diagram of a preferred embodiment of an apparatus for generating synchronizing pulses according to the present invention.

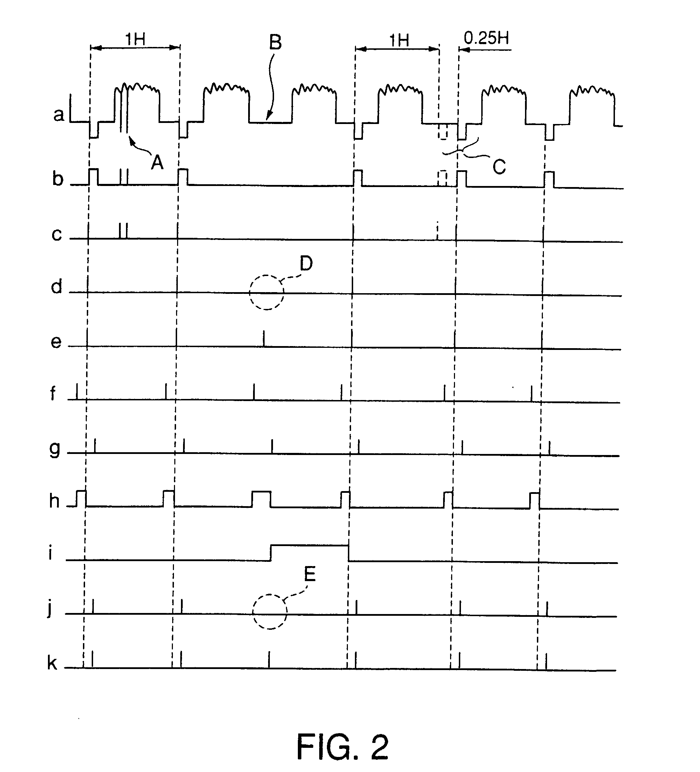

The operation of the apparatus shown in FIG. 1 will be disclosed with reference to FIG. 2.

Shown as a signal "a" is a TV signal (reproduced video signal) reproduced from a magnetic tape T by a reproducing unit (not shown). The signal "a" has been distorted. In detail, a video signal and a horizontal synchronizing signal have been lost at portions "A" and "B", respectively, shown in FIG. 2.

Furthermore, a horizontal synchronizing signal has been delayed at a portion "C" for 0. 25 horizontal scanning lines. The horizontal synchronizing signal should have been located at a portion depicted by a dot line. This delay has been caused by reproduction of TV signals produced according to a 625-line television system, such as PAL and SECAM, which will be described later.

The TV signal "a" is supplied to a threshold level detector 1. The detector 1 outputs a signal "b" including signal components (pulses) that correspond to signal components of the signal "a" the levels of which are lower than a predetermined reference signal level. In detail, the detector 1 detects horizontal synchronizing signals that are lower than the reference signal level and also signal components that are also lower than the reference signal level due to lack of video signals, and outputs the signal "b" that carries pulses corresponding to those horizontal synchronizing signals and signal components. The signal "b" does not include signal components that correspond to the signal components where horizontal synchronizing signals have been lost.

The signal "b" is supplied to a differentiating circuit 2. The circuit 2 catches rising edges of the pulses carried by the signal "b" and outputs pulses "c". The pulses "c" are generated at the same timing as the horizontal synchronizing signals and the signal components where video signals have been lost.

The pulses "c" are then supplied to a synchronizing pulse generator 3 that has an OR gate. The pulses "c" and gate pulses "h" are ORed by the OR gate to output synchronizing pulses "d" only that are included in the pulses "c" and that have been generated at the same timing as the horizontal synchronizing signals. The gate pulses "h" are supplied by a synchronizing pulse compensation circuit 4.

The synchronizing pulses "d" are supplied to the synchronizing pulse compensation circuit 4. The circuit 4 includes an automatic phase controller (AFC) 10, delay units 11 and 12, a gate pulse generator 13, a switching signal generator 14 and a switch SW.

As disclosed in detail later, the AFC 10 has a counter that starts counting of clock pulses in response to the synchronizing pulses "d" and generates an interpolation pulse "e" whenever the counted value reaches a value that corresponds one horizontal scanning line. The AFC 10 also generates a timing pulse "f' just before the generation of the interpolation pulse "e" and another timing pulse "g" just after the generation of the pulse "e".

The timing pulses "f' and "g", and also the synchronizing pulses "d" are supplied to the gate pulse generator 13. The generator 13 generates the gate pulses "h" which are then supplied to the synchronizing pulse generator 3. The generator 3 is controlled by the gate pulses "h" so that the OR gate of the synchronizing pulse generator 3 is opened to output the synchronizing pulses "d" in response to the timing pulses "f" while closed in response to the timing pulses "g" or the synchronizing pulses "d".

The timing pulses "f' and "g", and the synchronizing pulses "d" are further supplied to the switching signal generator 14. The generator 14 generates a switch control signal "i" that carries pulses. When no synchronizing pulse "d" (depicted by a dot line circle "D" in FIG. 2) follows a timing pulse "f", each pulse of the signal "i" becomes high at the same timing as the succeeding pulse "g" and becomes low at the same timing as the succeeding pulse "d".

The switch control signal "i" is then supplied to the switch SW. Also supplied to the switch SW are synchronizing pulses "j" and interpolation pulses "k". The synchronizing pulses "j" are generated by delaying the synchronizing pulses "d" for a predetermined period of time by the delay unit 11. The interpolation pulses "k" are generated by delaying the interpolation pulses "e" for a predetermined period of time by the delay unit 12. The switch SW is controlled by the switch control signal "i" to select and output the synchronizing pulses "j" if there is no defect while the interpolation pulses "k" to compensate for a defective pulse "j" that is depicted by a dot line circle "D" in FIG. 2.

The periods of time set for the delay units 11 and 12 are a little bit longer than the term between generation of an interpolation pulse "e" and a timing pulse "g".

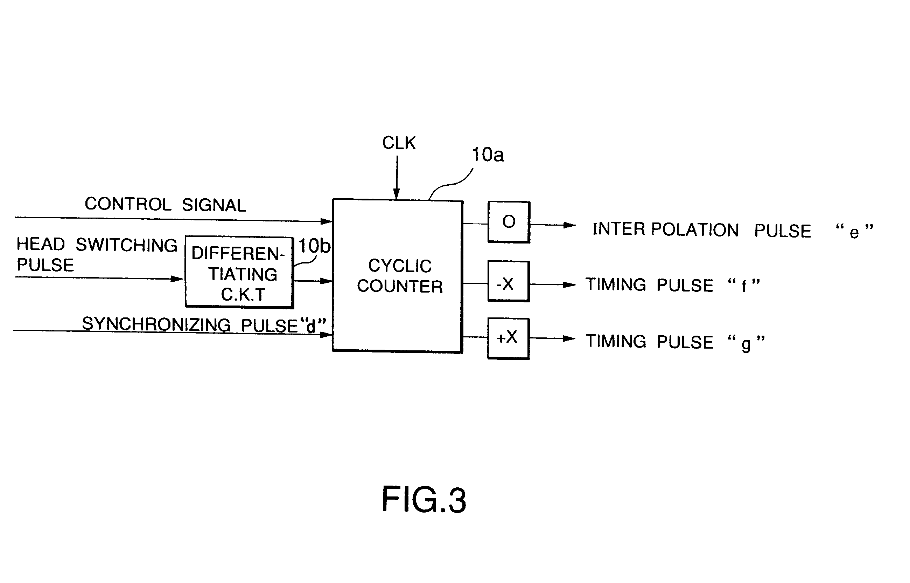

Disclosure on how the AFC 10 operates in response to the synchronizing pulses "d" will be made with reference to FIG. 3.

Shown in FIG. 3 is a block diagram of the AFC 10. The AFC has a cyclic counter 10a and a differentiating circuit 10b. Supplied to the counter 10a are the synchronizing pulses "d", and also a control signal, head switching pulses and clock pulses (CLK).

### The control signal is output by a microcomputer (CPU) 20 shown in FIG. 1 according to a reproduction mode, such as, normal playback, (2x) speed playback and still picture playback. The clock pulses CLK may also be output by the CPU 20.

The head switching pulses (the pulses of synchronizing to rotation of video heads) are generated based on head switching signals supplied by a magnetic head switching unit (not shown) at the moment of switching rotary video heads. The head switching signals are supplied to the differentiating circuit 10b. The circuit 10b generates the head switching pulses at the timing of head switching.

The cyclic counter 10a is reset by the synchronizing pulses "d" and starts counting-up, that is, "+ 1", "+ 2", ..., in response to each clock pulse CLK in the normal playback mode. Whenever the counted value reaches + 454, it returns to "- 455", and the counter 10a starts counting-up, that is, "-454", "-453", ... The value "-455" is changed to other values as described later when the mode is changed from the normal playback mode to the (2x) speed playback or still picture playback mode.

The clock pulses CLK are set so that one horizontal scanning line corresponds to the term from the resetting of the counter 10a for starting counting-up to the timing of the counted value reaching "0". The counter 10a outputs the interpolation pulse "e" in response to the counted value "0", and also the timing pulses "f" and "g" in response to the counted values "-X" and "X", respectively. The value "X" can be set at any appropriate value between "0" to "+454".

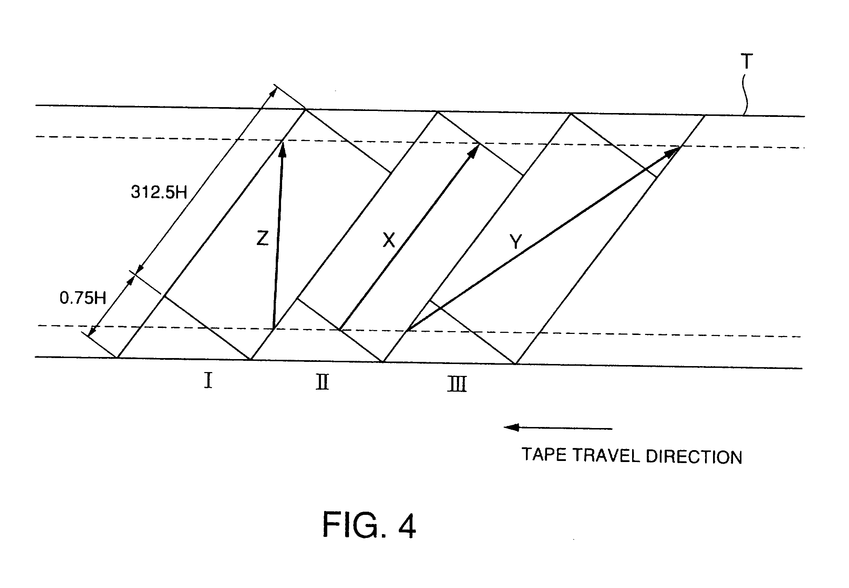

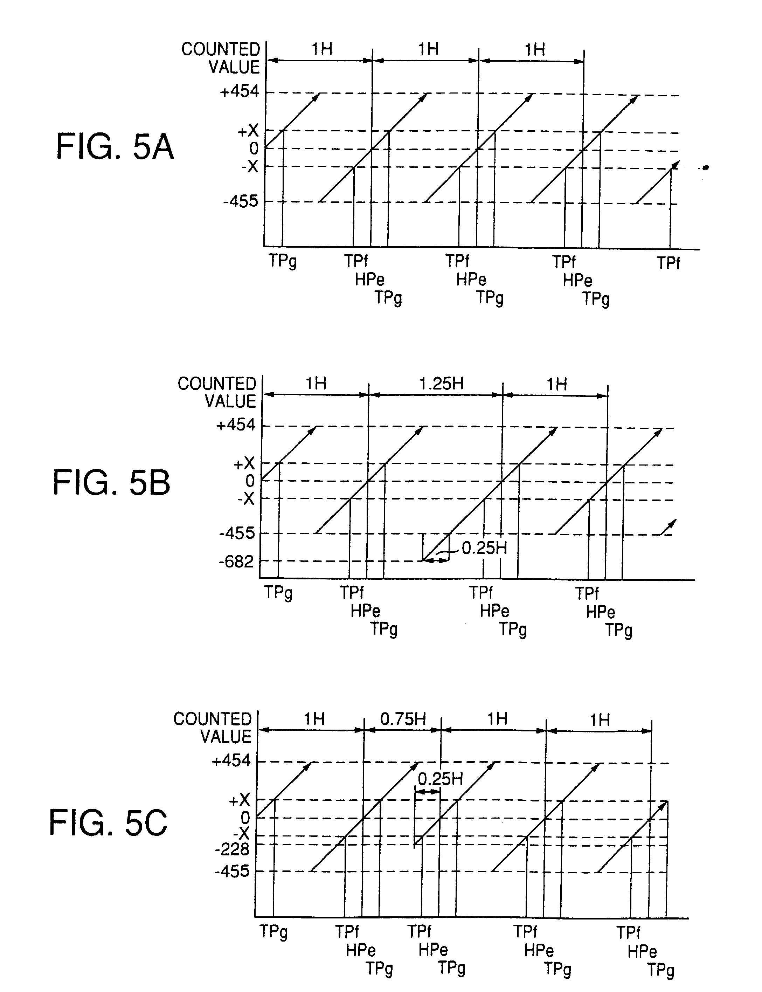

Operations of the AFC 10 will be described in detail with reference to FIGS. 4 and also FIGS. 5A to 5C.

Illustrated in FIG. 4 are tracks I, II and III of TV signals recorded on a magnetic tape T. Magnetic heads mounted on a magnetic recording/reproduction apparatus (not shown) scan the track II shown as an arrow "X" in the normal playback mode to reproduce TV signals each corresponding to 312. 5 horizontal scanning lines. On the other hand, other magnetic heads scan the track III shown as an arrow "Y" in the (2x) speed playback mode to reproduce TV signals each corresponding to 313. 25 (312. 5 + 0. 75) horizontal scanning lines. This results in delay of TV signals corresponding to 0. 25 lines per switching of magnetic heads as shown in the portion "C" in FIG. 2. Moreover, still other magnetic heads scan the track I shown as an arrow "Z" in the still picture playback mode to reproduce TV signals each corresponding to 311. 75 (312. 5 - 0. 75) horizontal scanning lines. This results in advance of TV signals corresponding to 0. 25 lines per switching of magnetic heads.

Based on the facts described above, the AFC 10 operates as follows:

First, in the normal playback mode, as shown in FIG. 5A, the cyclic counter 10a starts counting in response to an initial synchronizing pulse "d", and generates the timing pulses "g" and "f" at the counted values "+ X" and "-X", at the timing TPg and TPf, respectively. The counter 10a generates an interpolation pulse "e" at the timing HPe and is reset simultaneously at the counted value "0". This is the normal procedure when an input TV signal has no lack of horizontal synchronizing signal and hence the synchronizing pulses "d" are accurately supplied to the AFC 10 per horizontal scanning line. Even if the counter 10a is not reset due to lack of horizontal synchronizing signal, the counter 10a continuously generates the timing pulses "g" and "f" at the counted values "+ X" and "- X", respectively. The sign "H" in the drawings represents a horizontal scanning line.

When the mode is changed from the normal playback to the (2x) speed playback mode, the CPU 20 supplies the control signal to the cyclic counter 10a so that the gate pulses "h" generated by the gate pulse generator 13 (FIG. 1) are delayed to compensate for the delay described with reference to FIG. 4.

The cyclic counter 10a is adjusted to delay the gate pulses "h" as follows only when both the control signal and the head switching pulses are supplied to the counter 10a.

As shown in FIG. 5B, after counting-up to "+ 454", the counter 10a restarts counting-up from the value "- 682" (= - 455 - 227). The value "-455" is the value from which the counter 10a restarts counting-up in the normal playback mode. The value "- 227" corresponds to 0. 25 horizontal scanning lines which corresponds to the delay caused when the mode is changed from the normal to (2X) speed playback mode.

This adjustment of the cyclic counter 10a causes delay corresponding to 0. 25 horizontal scanning lines for the interpolation pulses "e" and the timing pulses "f' and "g" after the delay of horizontal synchronizing signal as shown in the portion "C" of the signal "a" in FIG. 2. The delayed timing pulses "f" and "g" are supplied to the gate pulse generator 13 (FIG. 1) to further cause delay corresponding to 0. 25 horizontal scanning lines for the gate pulses "h" generated by the generator 13.

The cyclic counter 10a then generates an interpolation pulse "e" at the counted value "0" and is simultaneously reset by a synchronizing pulse "d" to restart counting. The control signal for delaying the gate pulses "h" from the generator 13 has been continuously input the counter 10a. However, since no head switching pulse is input, the counter 10a is adjusted to start counting from the value "- 455" after the counted value reaches "+ 454".

As disclosed, whenever the rotary video head is changed, the head switching pulses are supplied to the cyclic counter 10a via the differentiation circuit 10b, the counter 10a is adjusted to change the value from which the recounting starts. This adjustment delays the gate pulses "h" generated by the gate pulse generator 13.

Disclosed next is the case where the mode is changed from the normal to still picture playback mode.

The CPU 20 supplies the control signal to the cyclic counter 10a so that the gate pulses "h" generated by the gate pulse generator 13 (FIG. 1) are advanced to compensate for the advance described with reference to FIG. 4.

The cyclic counter 10a is adjusted to advance the gate pulses "h" as follows only when both the control signal and the head switching pulses are supplied to the counter 10a.

As shown in FIG. 5C, after counting-up to "+ 454", the counter 10a restarts counting-up from the value "- 228" (= - 455 + 227). The value "-455" is the value from which the counter 10a restarts counting-up in the normal playback mode. The value "+ 227" corresponds to 0. 25 horizontal scanning lines which corresponds to the advance caused when the mode is changed from the normal to still picture playback mode.

This adjustment of the cyclic counter 10a causes advance corresponding to 0. 25 horizontal scanning lines for the interpolation pulses "e" and the timing pulses "f" and "g" after the advance of horizontal synchronizing signal. The advanced timing pulses "f" and "g" are supplied to the gate pulse generator 13 (FIG. 1) to further cause advance corresponding to 0. 25 horizontal scanning lines for the gate pulses "h" generated by the generator 13.

The cyclic counter 10a then generates an interpolation pulse "e" at the counted value "0" and is simultaneously reset by a synchronizing pulse "d" to restart counting. The control signal for delaying the gate pulses "h" from the generator 13 has been continuously input to the counter 10a. However, since no head switching pulses are input, the counter 10a is adjusted to start counting from the value "- 455" after the counting reaches the value "+454".

As disclosed, whenever the rotary head is changed, the head switching pulses are supplied to the cyclic counter 10a via the differentiation circuit 10b, the counter 10a is adjusted to change the value from which the recounting starts. This adjustment advances the gate pulses "h" generated by the gate pulse generator 13.

Now the disclosure refers back to FIG. 2. This drawing shows the case where a horizontal synchronizing signal of the reproduced TV signal "a" is delayed at the portion "C" for the period corresponding to 0. 25 horizontal scanning lines. This delay will happen as already described when the reproduction mode is changed from the normal to (x2) speed playback mode.

As disclosed, the interpolation pulse "e" and timing pulses "f" and "g" output by the AFC 10 are delayed by the period of time corresponding to 0. 25 horizontal scanning lines. The gate pulses "h" output by the gate pulse generator 13 are also delayed by the period of time corresponds to 0. 25 horizontal scanning lines. The gate pulses "h" carry the pulses generated at the same timing as the horizontal synchronizing signals. The gate pulses "h" and the pulses "c" are ORed by the synchronizing pulse generator 3 to output accurate synchronizing pulses "d".

The synchronizing pulses "d" and the interpolation pulses "e" are delayed by the delay units 11 and 12, respectively, by the periods of time that are a little bit longer than the term between generation of an interpolation pulse "e" and a timing pulse "g". The delay units 11 and 12 output synchronizing pulses "j" and interpolation pulses "k", respectively, both of which are then supplied to the switch SW.

The timing pulses "f" and "g" are supplied to the switching signal generator 14 that generates the switch control signal "i". The signal "i" is supplied to the switch SW. The switch SW is controlled by the control signal "i" so that it selects and outputs the interpolation pulses "k" whenever the input TV signal "a" has lost horizontal synchronizing signals while the synchronizing pulses "j" for portions of the input TV signal where horizontal synchronizing signals are present.

The synchronizing pulses output by the switch SW can be used as reference or timing singnals for magnetic reproducing/playback apparatuses. For example, synchronizing pulses can be used as write timing signals for memories in a time-axis compensation circuit (Time Base Corrector, TBC), reference signals for displaying images on a screen, sampling reference signals for A/D conversion required in digital processing of video signals.

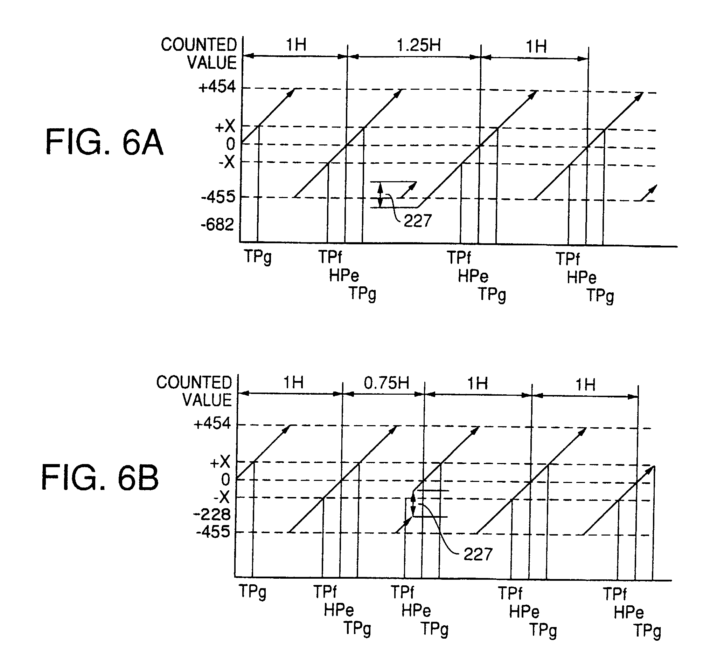

In the embodiment described above, the cyclic counter 10a is adjusted so that after counting-up to "+454", it restarts counting-up from the value "- 228" or "- 682". The cyclic counter 10a, however, can be adjusted to restart counting-up from other values, which will be disclosed with reference to FIGS. 6A and 6B. The same as FIGS 5A to 5C, the signs TPg, TPf and HPe represent the timing of generation of the timing pulses, "g" and "f", and "the interpolation pulses "e", and also the sign "H" represents the horizontal scanning line.

These drawings show that the cyclic counter 10a is adjusted so that after counting-up to "+ 454" in the normal playback mode, it restarts counting-up from the value "- 455". The counting is controlled to delay the gate pulses "h" generated by the gate pulse generator 13 at the moment when the control signal and the head switching pulses are supplied to the counter 10a.

When the mode is changed from the normal playback to the (2x) speed playback mode, as shown in FIG. 6A, after counting-up to "+454", the counter 10a restarts counting-up from the value that is obtained by subtracting the value "- 227" from the value at which the mode is changed. As already disclosed, the value "- 227" corresponds to 0. 25 horizontal scanning lines which corresponds to the delay caused when the mode is changed from the normal to (2x) speed playback mode.

On the other hand, when the mode is changed from the normal playback to the still picture playback mode, as shown in FIG. 6B, after counting-up to "+ 454", the counter 10a restarts counting-up from the value that is obtained by adding the value "+227" to the value at which the mode is changed. As already disclosed, the value "+ 227" corresponds to 0. 25 horizontal scanning lines which corresponds to the advance caused when the mode is changed from the normal to still picture playback mode.

Mode change from the normal to still picture playback at any value in the range from "+ 228" to "+ 454" will cause counting beyond "+454" due to addition of "+ 227" to a value in that range. The cyclic counter 10a then continues counting without restarting from the value "- 455". In order to avoid this miscounting, the counter 10a is adjusted so that the value obtained by addition of "+227" to a value in the range from "+228" to "+454" is added to the value "- 455", and it restarts counting from that value obtained after addition to the value "- 455". The value in that range is the value at which the mode is changed from the normal to still picture playback.

As disclosed above, the present invention achieves generation of synchronizing pulses at accurate timing even if horizontal synchronizing signals carried by TV signals produced according to a television system, such as 625-line television system, PAL and SECAM, etc, are delayed or advanced due to mode change from the normal to (2x) speed or still picture playback.

## Claims

1. An apparatus for generating synchronizing pulses based on horizontal synchronizing signals carried by an input television (TV) signal, the apparatus comprising:
a generator (3) to generate a first pulse at the same timing as each of the synchronizing signals;
a first controller (10) to generate a control pulse in response to the first pulse and control the generator so that the generation of the first pulse depends on a width of the control pulse;
a second controller (12), in response to the first pulse, to output the first pulse as each of the synchronizing pulses at the same timing as the horizontal synchronizing signals; and
a shifter (13) to shift the control pulse for a period of time by which one of the horizontal synchronizing signals has been shifted, thus one of the synchronizing pulses being shifted for the period of time, the synchronizing pulse being corresponding to the shifted horizontal synchronizing signal.

2. The apparatus according to claim 1, wherein the generator includes a detector to detect levels of the TV signal to determine whether the TV signal have lost at least one of the horizontal synchronizing signals, the first pulse being not generated for a signal component of the TV signal where the horizontal synchronizing signal has been lost.

3. The apparatus according to claim 2, wherein
the first controller generates an interpolation pulse for the signal component; and
the second controller, in response to the interpolation pulse, outputs the interpolation pulse as one of the synchronizing pulses to compensate for the non-generated first pulse.

4. The apparatus according to claim 1, wherein the first controller generates first and second timing pulses before and after the first pulse, respectively, the control pulse being generated with the width based on the timing pulses to control the generator such that the first pulse is generated at the timing of generation of the first timing pulse while not generated at the timing of generation of, at least, the second timing pulse.

5. The apparatus according to claim 1, wherein the first controller includes a counter that is rest by the first pulse and starts counting, the control pulse being generated according to a counted value that corresponds to the period of time.

6. A method of generating synchronizing pulses based on horizontal synchronizing signals carried by an input television (TV) signal, the method comprising the steps of:
generating a first pulse at the same timing as each of the synchronizing signals;
generating a control pulse in response to the first pulse;
controlling the generation of the first pulse so that the generation depends on a width of the control pulse;
outputting the first pulse as each of the synchronizing pulses at the same timing as the horizontal synchronizing signals, in response to the first pulse; and
shifting the control pulse for a period of time by which one of the horizontal synchronizing signals has been shifted, thus one of the synchronizing pulses being shifted for the period of time, the synchronizing pulse being corresponding to the shifted horizontal synchronizing signal.
